# EUROPÄISCHE PATENTSCHRIFT

(11) **EP 0 904 698 B1**
(45) Veröffentlichungstag und Bekanntmachung des Hinweises auf die Patenterteilung: **07.05.2003**
(21) Anmeldenummer: 98203064.5
(22) Anmeldetag: 14.09.1998
(51) Int. Cl.: A22C 11/02

(54) **Verfahren zum Verschliessen von schlauch- oder beutelförmigen Verpackungshüllen und Verschliessvorrichtung**
Method and device for tying tubular casings
Procédé et dispositif pour ligaturer des enveloppes d'emballage tubulaires

(30) Priorität: 24.09.1997 DE 19742213
(43) Veröffentlichungstag der Anmeldung: 31.03.1999
(73) Patentinhaber: Poly-clip System GmbH & Co. KG, 60489 Frankfurt am Main (DE)
(72) Erfinder: Demmig, Gerhard, 64404 Bickenbach (DE); Bienert, Olaf, 65529 Waldems (DE); Ruschitschka, Ortwin, 64572 Büttelborn (DE)
(74) Vertreter: Eisenführ, Günther, Dipl.-Ing.

(56) Entgegenhaltungen:
- EP-A- 0 507 374
- EP-A- 0 661 209
- DE-A- 3 206 674
- DE-A- 3 811 421
- DE-A- 3 840 522
- US-A- 4 506 494
- US-A- 4 675 945
- US-A- 4 980 949

## Beschreibung

Die Erfindung betrifft ein Verfahren zum Verschließen von schlauchförmigen Verpackungshüllen, die von einem Vorrat abgezogen und mit zähem Füllgut befüllt werden, und bei dem ein füllgutfreier Zopf durch Einschnüren der Verpackungshülle an einer ortsfesten Einschnürstelle erzeugt und durch Setzen zweier Verschlussklammem verschlossen wird, wobei die Verpackungshülle vor dem Einschnüren neben der Einschnürstelle zusammengedrückt wird. Die Erfindung betrifft außerdem eine Verschlleßvorrichtung mit einem Verdränger zum Einschnüren der Verpackungshülle.

Es ist bekannt, befüllte schlauch- oder beutelförmige Verpackungshüllen mit Hilfe eines Verdrängers zu verschließen. Der Verdränger ist üblicherweise hinter der Mündung des Füllrohres einer Füllmaschine angeordnet. Die Verpackungshülle ist einseitig verschlossen und so auf das Füllrohr aufgezogen, dass sich das verschlossene Ende der Verpackungshülle vor der Füllrohrmündung befindet.

Zum Befüllen wird das Füllgut durch das Füllrohr in die einseitig verschlossene Verpackungshülle gedrückt. Dabei wird weiteres Verpackungshüllenmaterial von einem Vorrat auf dem Füllrohr abgezogen. Diesem Abziehen von Verpackungshüllenmaterial aus dem Vorrat auf dem Füllrohr wirkt eine Darmbremse entgegen, die die Verpackungshülle in der Nähe der Füllrohrmündung auf die Mantelfläche des Füllrohres drückt und auf diese Weise bremst. Durch die Bremskraft der Darmbremse, die beim Befüllen der Verpackungshülle vom Fülldruck überwunden werden muss, wird die Höhe des Fülldrucks bestimmt.

Wenn die Verpackungshülle fertig befüllt ist, muss sie auch an ihrem zweiten Ende verschlossen werden. Dies geschieht unter Zuhilfenahme eines Verdrängers. Dieser kann eine Verdrängerklappe oder ein Spreizverdränger mit zwei Verdrängerscheren sein.

Im Falle eines Spreizverdrängers wird die zu verschließende Verpackungshülle hinter der Füllrohrmündung von zwei zunächst unmittelbar benachbarten Verdrängerscheren eingeschnürt, so dass ein kurzer füllgutfreier Zopf entsteht. Anschließend werden die beiden Verdrängerscheren zum Verlängern des füllgutfreien Zopfes gespreizt, das heißt, die füllrohrfeme Verdrängerschere wird von der füllrohmahen Verdrängerschere in Füllrohrlängsrichtung wegbewegt. Die beiden Verdrängerscheren werden soweit gespreizt, dass der entstandene füllgutfreie Zopf ausreichend lang ist, um mit zwei Verschlussklammem verschlossen zu werden. Nachdem die Verschlussklammem gesetzt und verschlossen sind, kann der Zopf zwischen den beiden Verschlussklammem durchtrennt werden. Die soeben befüllte Verpackungshülle ist damit an beiden Enden verschlossen, während die nächste zu befüllende Verpackungshülle an ihrem einen Ende verschlossen ist.

Im Falle einer Verdrängerklappe erübrigt sich das Verlängern des Zopfes nach dem Einschnüren, da die Verdrängerklappe so breit ist, daß sie den Zopf bereits beim Schließen auf einer Länge einschnürt, die zum Setzen zweier Verschlussklammern ausreicht.

Bei zähem Füllgut, z.B. Dichtungsmassen, Kitten, Bitumen, Silikon, Polyurethan und ähnlichen Stoffen, kann der Verdränger die befüllte Verpackungshülle nur unter Schwierigkeiten einschnüren. Ebenso schwierig ist bei einem Spreizverdränger das nachfolgende Spreizen der Verdrängerscheren zum Verlängem des füllgutfreien Zopfes. Besonders bei Verpackungshüllen mit einem Durchmesser von mehr als 30 mm besteht die Gefahr, dass die Verpackungshülle beim Einschnüren und Spreizen poröse Stellen oder gar Risse bekommt. Selbst wenn es sich nur um sehr geringfügige Verletzungen handelt, können durch diese Luft und Feuchtigkeit in die Verpackungshülle eintreten, was je nach Art des Füllgutes zu dessen Aushärten führen kann. Dies gilt besonders dann, wenn das Material für die Verpackungshülle - wie bei solchem Füllgut vielfach üblich - aus Aluminium oder Aluminium-Verbundfolie besteht und als Dampfsperre verwendet wird. Selbst wenn bei Verwendung von Aluminium-Verbundfolie nur die Aluminiumschicht verletzt wird, treten Luft und Feuchtigkeit durch die verbleibende Kunststoffolie, weil diese keine ausreichende Dampfsperre bildet.

Aus der EP 0 507 374 A1 ist das eingangs geschilderte Verfahren bekannt, bei dem ein Pumpenkolben eine bestimmte Füllgutmenge aus einem Füllrohr in die Verpackungshülle drückt. Hinter dieser Füllgutmenge wird bei ruhender Verpackungshülle diese von gegeneinander schwenkbaren Gelenkhebeln zusammengedrückt, um ein Zurückflleßen des Füllgutes zu verhindern. Alsdann wird zwischen den Gelenkhebeln und der Mündung des Füllrohres zunächst von einem Backenpaar und nach darauffolgendem Nachziehen von Hüllenmaterial von einem zweiten Backenpaar der Hüllenzopf gebildet, auf den zwei Verschlussklammem gesetzt werden. Hier wird also nicht aus einem durchgehenden Füllgutstrang portioniert.

Bei einem Verfahren zum Verschließen von Portionspackungen aus einem durchgehenden Füllgutstrang ist es aus der DE-OS 38 11 421 bekannt, die bereits fertig gefüllte Verpackungshülle vor dem Einschnüren durch die Verdrängerscheren gegen die Kraft der Darmbremse weiter abzuziehen. Dabei entsteht hinter der Füllrohrmündung infolge verringerter Füllung eine Einschnürung, die das weitere Einschnüren durch die Verdrängerscheren und deren Spreizen erleichtert. Dieser Stand der Technik ist mit dem Nachteil behaftet, dass die zum Abziehen der befüllten Verpackungshülle erforderliche Kraft nur schwer in die Verpackungshülle eingeleitet werden kann. Wenn die Abziehkraft beispielsweise über die Verschlussklammer an dem einen verschlossenen Ende der Verpackungshülle eingeleitet wird, besteht die Gefahr, dass die Verschlussklammer von der Verpackungshülle abgezogen wird. Außerdem besteht die Gefahr, dass der Füllgutstrang in der Verpackungshülle an der Einschnürstelle unkontrolliert abreißt. Ein weiterer Nachteil ist, dass der Einschnürdurchmesser und die Länge der Einschnürung bei den bekannten Verfahren sehr stark von der Viskosität des Füllgutes abhängen.

Der Erfindung liegt daher die Aufgabe zugrunde, die Nachteile des Standes der Technik durch ein neues Verfahren und eine neue Vorrichtung möglichst weitgehend zu vermeiden.

Diese Aufgabe wird erfindungsgemäß durch ein Verfahren der eingangs genannten Art gelöst, bei dem die durchgehend befüllte Verpackungshülle in Füllrichtung vor der Einschnürstelle zusammengedrückt und vor dem Einschnüren unter gleichzeitigem Verdrängen dort befindlichen Füllgutes wieder freigegeben wird, dass beim Zusammendrücken zusätzliches Verpackungshüllenmaterial vom Vorrat abgezogen wird, und dass beim Einschnüren an der Einschnürstelle befindliches Füllgut In den zuvor zusammengedrückten Bereich der Verpackungshülle verdrängt wird. Durch das Zusammendrücken der gefüllten Verpackungshülle entsteht in Füllrichtung vor dem Verdränger ein Bereich, in dem die Verpackungshülle bereits einen kleineren Durchmesser aufweist - also sozusagen voreingeschnürt ist - und der gleichzeitig exakt kontrollierbar unterfüllt ist, zumal während des Zusammendrückens der Verpackungshülle zusätzliches Verpackungshüllenmaterial von einem Vorrat abgezogen wird. Auf diese Weise wird eine übermäßige Dehnung der Verpackungshülle beim Zusammendrücken vermieden, die zu einer Beschädigung der Verpackungshülle führen könnte. Erst nach diesem Zusammendrücken und dessen Beendigung wird die Verpackungshülle unter gleichzeitiger Verdrängung an der Einschnürstelle befindlichen Füllgutes in den vorher zusammengedrückten Bereich so weit eingeschnürt, dass dort ein füllgutfreier Zopf entsteht.

Die Lösung der vorstehenden Aufgabe besteht erfindungsgemäß auch in einer Verschließvorrichtung mit einem Verdränger zum Einschnüren der Verpackungshülle, bei der in Füllrichtung vor dem Verdränger eine Klemmeinrichtung zum Zusammendrücken der Verpackung angeordnet ist. Mit einer solchen Verschließvorrichtung lässt sich das erfindungsgemäße Verfahren mit all seinen Vorteilen durchführen.

Die Klemmeinrichtung weist dabei vorzugsweise Quetschkufen oder Quetschwalzen auf, welche auf die Verpackungshülle pressbar sind. Durch die Form der Quetschkufen oder Quetschwalzen wird die Form der zusammengedrückten Verpackungshülle bestimmt. Dies gilt insbesondere für die Länge, auf der die Verpackungshülle zusammengedrückt wird. Quetschwalzen haben, wenn sie drehbar gelagert sind, den weiteren Vorteil, dass sie das Nachziehen von zusätzlichem Verpackungshüllenmaterial während des Zusammendrückens erleichtern.

Die Erfindung soll nun mit Hilfe der Zeichnung näher erläutert werden. Die Figuren 1 bis 3 der Zeichnung zeigen drei Stadien des erfindungsgemäßen Verfahrens bei der Durchführung mit einer erfindungsgemäßen Vorrichtung, und zwar:
- Figur 1: den Füllvorgang;
- Figur 2: das Zusammendrücken der Verpackungshülle; und
- Figur 3: den Abschluß des Verschließvorgangs.

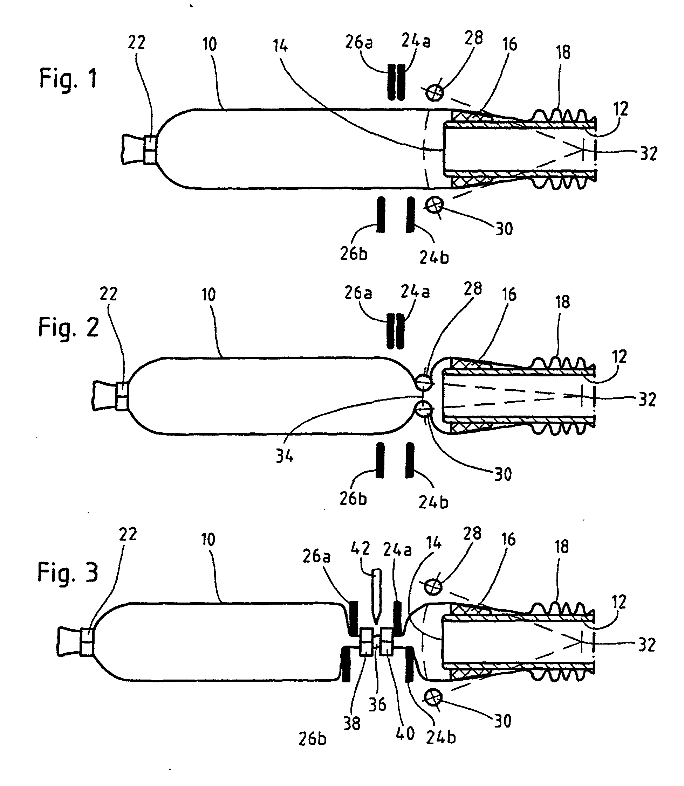

Die Figuren 1 bis 3 zeigen nur die wesentlichen, beim Befüllen und Verschließen einer schlauchförmigen Verpackungshülle 10 beteiligten Bestandteile einer Füllmaschine und einer Verschließmaschine. Auf Seiten der Füllmaschine ist dies zunächst ein Füllrohr 12 mit einer Mündung 14. In der Nähe der Mündung 14 ist eine Darmbremse 16 auf das Füllrohr aufgeschoben.

Die einseitig mit einer Verschlußklammer 22 verschlossene Verpackungshülle 10 ist mit ihrem offenen Ende über die Darmbremse 16 hinweg auf die Mantelfläche des Füllrohres 12 gestülpt und bildet dort einen raupenförmigen Vorrat 18. Zum Befüllen der Verpackungshülle 10 wird Füllgut durch das Füllrohr 12 in die einseitig verschlossene Verpackungshülle 10 gepreßt. Dabei wird ständig Verpackungshüllenmaterial aus dem Vorrat 18 nachgezogen. Dem Nachziehen von Verpackungshüllenmaterial aus dem Vorrat 18 wirkt die Darmbremse 16 entgegen, so daß zum Nachziehen von Verpackungshüllenmaterial eine Kraft erforderlich ist, die durch den Fülldruck beim Einfüllen des Füllgutes in die Verpackungshülle 10 aufgebracht werden muß.

Sobald die Verpackungshülle 10 ausreichend befüllt ist, muß sie auch an ihrem zweiten Ende verschlossenen werden. Dazu dient im Ausführungsbeispiel ein Spreizverdränger mit zwei Verdrängerscheren 24 und 26, jeweils bestehend aus einer oberen Scherenhälfte 24a bzw. 26a und einer unteren Scherenhälfte 24b und 26b. Zusätzlich sind zwei Quetschwalzen 28 und 30 vorgesehen, die um einen gemeinsamen Schwenkpunkt 32 geschwenkt und auf die Außenseite der Verpackungshülle 10 gedrückt werden können. Dadurch entsteht eine Quetschstelle 34 in der Verpackung, deren Maß über den Schwenkwinkel der Quetschwalzen 28 und 30 einstellbar ist. Beim Einschwenken der Quetschwalzen 28 und 30 wird die Verpackungshülle 10 zusammengedrückt. Gleichzeitig wird das Füllgut aus der entstehenden Quetschstelle 34 verdrängt und Verpackungshüllenmaterial aus dem Vorrat 18 nachgezogen, da zum Erzeugen der Quetschstelle 34 zusätzliches Hüllenmaterial erforderlich ist. Das Nachziehen des zusätzlich benötigten Verpackungshüllenmaterials wird dadurch erleichtert, daß die Quetschwalzen 28 und 30 drehbar sind und auf der Verpackungshülle 10 abrollen können. Auf diese Weise ist die Belastung der Verpackungshülle 10 beim Zusammendrücken sehr gering. Die Quetschstelle 34 befindet sich schließlich zwischen der füllrohrnäheren Verdrängerschere 24 und der Füllrohrmündung 14. Dieser Zustand ist in Figur 2 dargestellt.

Nach dem Erzeugen der Quetschstelle 34 werden die Quetschwalzen 28 und 30 wieder in ihre Ausgangslage zurückgeschwenkt. Die Quetschstelle 34 bleibt dabei in der Regel erhalten. Auf jeden Fall ist die Verpackungshülle 10 nach dem Zusammenquetschen und anschließenden Wegschwenken der Quetschwalzen 28 und 30 an der Quetschstelle 34 schlaff und nur locker befüllt. Damit sind die Voraussetzungen dafür geschaffen, daß die beiden Verdrängerscheren 24 und 26 die Verpackungshülle 10 beim Schließen leicht einschnüren können. Beim Schließen sind die beiden Verdrängerscheren 24 und 26 unmittelbar benachbart. Durch Einschnüren der Verpackungshülle 10 erzeugen sie einen kurzen füllgutfreien Zopf, dessen Länge nicht ausreicht, um ihn durch Setzen zweier Verschlußklammern zu verschließen. Daher werden die Verdrängerscheren 24 und 26 nach dem Einschnüren gespreizt, das heißt, das füllrohrfernere Verdrängerscherenpaar 26 wird axial in Füllrohrrichtung von dem füllrohrnäheren Verdrängerscherenpaar 24 wegbewegt. Dabei wird weiteres Verpackungshüllenmaterial durch die Verdrängerschere 24 nachgezogen. Der auf diese Weise verlängerte füllgutfreie Zopf 36 wird dann mit zwei Verschlußklammer 38 und 40 verschlossen. Dieser Zustand ist in Figur 3 abgebildet.

Nach dem Verschließen wird der Zopf 36 zwischen den beiden Verschlußklammern 38 und 40 mit einem Trennmesser 42 durchtrennt. Im Ergebnis ist die soeben befüllte Verpackung an beiden Enden verschlossen und von der übrigen schlauchförmigen Verpackungshülle 10 getrennt. Diese ist - wie gewünscht - an ihrem einen, vor der Füllrohrmündung 14 befindlichen Ende verschlossen und kann, wie bereits beschrieben, befüllt werden. Die Verdrängerscheren 24 und 26 werden dazu in ihre in Figur 1 gezeigte Ausgangslage zurückbewegt. Auch das Trennmesser 42 wird wieder zurückgeschwenkt.

## Patentansprüche

1. Verfahren zum Verschließen von schlauchförmigen Verpackungshüllen (10), die von einem Vorrat (18) abgezogen und mit zähem Füllgut befüllt werden, und bei dem ein füllgutfreier Zopf (36) durch Einschnüren der Verpackungshülle (10) an einer ortsfesten Einschnürstelle erzeugt und durch Setzen zweier Verschlussklammem (38, 40) verschlossen wird, wobei die Verpackungshülle (10) vor dem Einschnüren neben der Einschnürstelle zusammengedrückt wird,
**dadurch gekennzeichnet, dass** die befüllte Verpackungshülle in Füllrichtung vor der Einschnürstelle zusammengedrückt und vor dem Einschnüren unter gleichzeitigem Verdrängen dort befindlichen Füllgutes wieder freigegeben wird, dass beim Zusammendrücken zusätzliches Verpackungshüllenmaterial vom Vorrat (18) abgezogen wird, und dass beim Einschnüren an der Einschnürstelle befindliches Füllgut in den zuvor zusammengedrückten Bereich der Verpackungshülle verdrängt wird.

2. Verschließvorrichtung, insbesondere zum Durchführen des Verfahrens nach Anspruch 1, mit einem Verdränger (24, 26) zum Einschnüren der Verpackungshülle
**dadurch gekennzeichnet, dass** in Füllrichtung vor dem Verdränger (24, 26) eine Klemmeinrichtung (28, 30) zum Zusammendrücken der Verpackungshülle angeordnet ist.

3. Verschließvorrichtung nach Anspruch 2,
**dadurch gekennzeichnet, dass** die Klemmeinrichtung Quetschkufen oder Quetschwalzen (28, 30) aufweist, welche auf die Verpackungshülle (10) preßbar sind.

## Claims

1. A method for closing tubular packaging casings (10) which are drawn off from a store (18) and are filled with viscous filling, and in which a tail (36) free of filling is produced by tying off the casing (10) at a fixed tying-off point and is closed off by positioning two closing clips (38, 40), the casing (10) being compressed close to the tying-off point before tying-off,
**characterised in that** the filled casing is compressed in the direction of filling before the tying-off point and before tying-off is released again with the simultaneous displacement of filling located at that point, that upon compression additional casing material is drawn off from the store (18) and that filling located at the tying-off point upon tying off is displaced into the previously compressed region of the casing.

2. A closing device, in particular for performing the method according to Claim 1, with a displacing means (24, 26) for tying off the casing, **characterised in that** a clamping means (28, 30) for compressing the casing is arranged in the direction of filling before the displacing means (24, 26).

3. A closing device according to Claim 2, **characterised in that** the clamping means has squeezing pads or squeezing rollers (28, 30) which can be pressed against the casing (10).

## Revendications

1. Procédé de fermeture d'enveloppes d'emballage tubulaires (10), qui sont retirées d'une réserve (18) et remplies de produit de remplissage visqueux, dans lequel une tresse (36) sans produit de remplissage est réalisée en étranglant l'enveloppe d'emballage (10) à un endroit d'étranglement fixe et est fermée en plaçant deux agrafes de fermeture (38, 40), l'enveloppe d'emballage (10) étant comprimée avant l'étranglement à côté de l'endroit d'étranglement,
**caractérisé en ce que** l'enveloppe d'emballage remplie est comprimée en avant de l'endroit d'étranglement par référence au sens de remplissage et est de nouveau dégagée avant de procéder au serrage en refoulant en même temps le produit de remplissage qui s'y trouve, **en ce que** du matériau d'enveloppe d'emballage supplémentaire est retiré de la réserve (18) lors de la compression, et **en ce que** le produit de remplissage se trouvant à l'endroit d'étranglement est refoulé dans la région préalablement comprimée de l'enveloppe d'emballage lors de l'étranglement.

2. Dispositif de fermeture, destiné en particulier à mettre en oeuvre le procédé selon la revendication 1, comportant un dispositif de refoulement (24, 26) destiné à étrangler l'enveloppe d'emballage, **caractérisé en ce qu'**un dispositif de serrage (28, 30) est disposé en avant du dispositif de refoulement par référence au sens de remplissage en vue de comprimer l'emballage.

3. Dispositif de fermeture selon la revendication 1, le dispositif de serrage comporte des patins de pressage ou des rouleaux de pressage (28, 30) qui peuvent être pressés sur l'enveloppe d'emballage (10).
